(19) **Europäisches Patentamt**
**European Patent Office**
**Office européen des brevets**

(11) **EP 2 375 914 B1**

(12) **EUROPEAN PATENT SPECIFICATION**

(45) Date of publication and mention
of the grant of the patent:
**07.11.2012 Bulletin 2012/45**

(51) Int Cl.:
*A23G 9/46* *(2006.01)*    *A23G 9/20* *(2006.01)*
*A23G 9/28* *(2006.01)*

(21) Application number: **09795368.1**

(86) International application number:
**PCT/EP2009/066249**

(22) Date of filing: **02.12.2009**

(87) International publication number:
**WO 2010/069770 (24.06.2010 Gazette 2010/25)**

(54) **METHOD FOR PRODUCING AN EDIBLE GAS HYDRATE**

VERFAHREN ZUR HERSTELLUNG EINES ESSBAREN GASHYDRATS

PROCÉDÉ DE FABRICATION D'UN HYDRATE DE GAZ COMESTIBLE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.12.2008 EP 08172254**
**19.12.2008 EP 08172253**

(43) Date of publication of application:
**19.10.2011 Bulletin 2011/42**

(73) Proprietors:
• **Unilever PLC**
**London, Greater London EC4Y 0DY (GB)**
Designated Contracting States:
**CY GB IE MT**
• **Unilever NV**
**3013 AL Rotterdam (NL)**
Designated Contracting States:
**AT BE BG CH CZ DE DK EE ES FI FR GR HR HU IS IT LI LT LU LV MC MK NL NO PL PT RO SE SI SK SM TR**

(72) Inventors:
• **TELFORD, Julia, Helen**
**Bedford**
**Bedfordshire MK44 1LQ (GB)**
• **WILLIAMS, Andrea**
**Bedford**
**Bedfordshire MK44 1LQ (GB)**
• **ZHU, Shiping**
**Bedford**
**Bedfordshire MK44 1LQ (GB)**

(74) Representative: **Willett, Christopher David et al**
**Nash Matthews**
**90-92 Regent Street**
**Cambridge**
**CB2 1DP (GB)**

(56) References cited:
**EP-A- 0 352 829    EP-A2- 0 201 143**
**WO-A-02/34065    WO-A-97/16980**
**US-A- 3 333 969    US-A- 4 393 660**
**US-A- 5 538 745**

EP 2 375 914 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field of the Invention**

The present invention relates to edible composites of gas hydrate and ice, and frozen confections comprising such composites.

**Background to the Invention**

Frozen confections which contain a hydrate of a gas such as carbon dioxide ($CO_2$) or nitrous oxide ($N_2O$) give a pleasant sparkling or fizzy sensation when consumed. Such products are disclosed for example in WO 94 / 02414, WO 97 / 16980 and US 4,398,394. Gas hydrates (also known as clathrates) are usually produced by contacting the gas with water under high pressure and then reducing the temperature. Generally, an excess of water is used so that a composite consisting of gas hydrate crystals in ice is formed. The composite is then typically ground into particles and mixed with the other ingredients of the frozen confection (e.g. a syrup or mix containing sugar, flavour, protein, fat etc.). The gas hydrate is formed using essentially pure water, since the presence of other ingredients (such as sugar, colour, flavour etc.) decreases the controllability of the process and / or reduces the stability of the product.

WO 02 / 34065 discloses a method for preparing a carbonated beverage wherein carbon dioxide hydrate particles are mixed with a syrup component. It is stated that syrups which contain sugar should not be added before completion of the $CO_2$-hydrate reaction because this makes the reaction less stable as the syrup tend to foam. When an artificially sweetened syrup is used, it can be added before the hydrate is formed. When such a syrup is used pectin and guar gum can be added into the product during mixing to prevent separation. There is no suggestion that any other substances could be added before the hydrate is formed.

US 5 538 745 discloses a process for producing frozen confections by mixing particles of sugar encapsulated in fat into a frozen aerated solution of milk protein. It is stated that clathrate ice crystals can be formed by adding $CO_2$, $N_2$, $N_2O$ or mixtures thereof to the protein solution. These gases can comprise up to 100% of the gases used to aerate the solution. The milk protein is present in amounts typical for ice cream, i.e. > 5wt%. The "activity" of the gas hydrate, i.e. the amount of entrapped gas per unit weight of ice, depends on temperature and pressure conditions in which the gas hydrate is produced as well as the relative amounts of gas and water that are contacted with each other. It would be desirable to be able to produce gas hydrates with increased activity.

**Brief Description of the Invention**

We have now found that composites of gas hydrate and ice having increased activity can be produced provided that an aerating agent is present during the formation of the gas hydrate. Accordingly, in a first aspect, the present invention provides a method for producing an edible composite of gas hydrate and ice, the method comprising the steps of:

a) contacting an aqueous solution with carbon dioxide or nitrous oxide at a sufficiently high pressure to form a gas hydrate, but at a temperature preventing this; and then

b) reducing the temperature of the solution to form the gas hydrate and ice; characterized in that the aqueous solution contains from 0.01 to 5 wt% of an aerating agent.

Preferably the gas is carbon dioxide.

Preferably the aerating agent is a protein, a protein hydrolysate, a hydrophobin, a non-ionic surfactant or an anionic surfactant.

Preferably the aerating agent is present in the aqueous solution in an amount of from 0.05 to 2 wt%, more preferably from 0.1 to 1 wt%.

Preferably the aqueous solution consists essentially of water, the gas and the aerating agent.

In one embodiment, step a) is performed in a pressure vessel which is then placed in a freezer in step b).

In another embodiment, in step b) the aqueous solution is passed under pressure through an extruder with a refrigerated barrel.

In a second aspect, the present invention provides an edible composite of gas hydrate and ice comprising from 0.01 to 5 wt% of an aerating agent.

Preferably the edible composite consists essentially of ice, the gas hydrate and the aerating agent

In a third aspect, the present invention provides a process for producing a frozen confection, the process comprising producing a composite according to the second aspect of the invention; and then combining the composite with the remaining ingredients of the frozen confection.

Preferably the composite is produced using the method of the first aspect of the invention.

Preferably the composite constitutes from 5 to 50 wt%, preferably 10 to 20 wt% of the frozen confection.

In a fourth aspect, the present invention provides a frozen confection comprising an edible composite of the second aspect of the invention.

**Detailed Description of the Invention**

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in Ice Cream, 6th Edition, Robert T. Marshall, H. Douglas Goff and Richard W. Hartel (2003), Kluwer Academic/Plenum Publishers. All percentages, unless otherwise stated, refer to the percentage by weight based on the frozen confection.

Brief Description of the Drawings

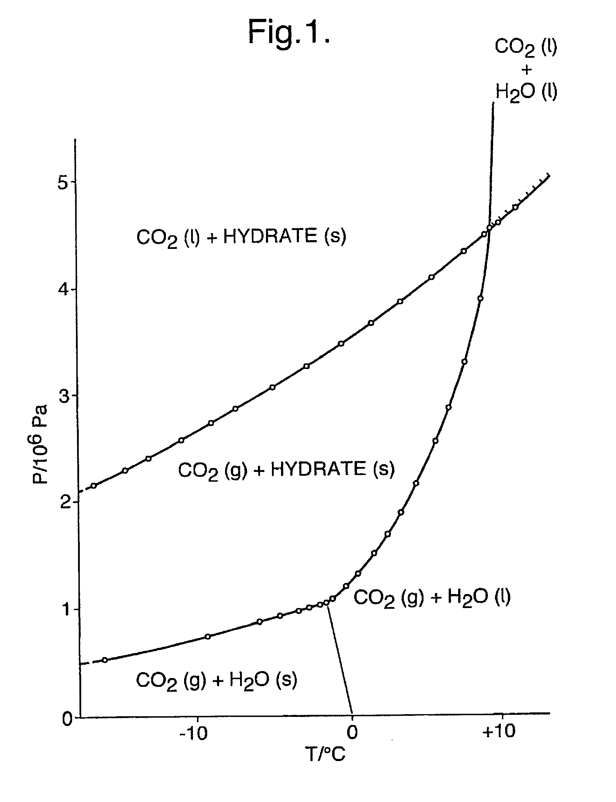

The present invention will be further described with reference to Figure 1 which shows the phase diagram for carbon dioxide hydrates.

Gas hydrates and their production

A gas hydrate is a crystalline solid which consists of a gas molecule surrounded by a cage of water molecules. Thus it is similar to ice, except that the crystalline structure has a guest gas molecule within the cage of water molecules. Many gases have molecular sizes suitable to form hydrates, including carbon dioxide and nitrous oxide. Gas hydrates have a particular stoichiometric formula: for carbon dioxide gas hydrate it is $CO_2 \bullet 5.75H_2O$. However, gas hydrate crystals are unstable at atmospheric pressure (even at typical cold store temperatures). Therefore, when gas hydrates are prepared for use in frozen confections, an excess of water (i.e. more water than prescribed by the stoichiometric ratio) is typically used so that a composite of gas hydrate crystals in ice is formed. In effect, the ice acts as a microscopic pressure vessel which prevents the gas hydrate from decomposing during manufacture and storage. On warming (e.g. in the mouth when consumed), the ice layer around the gas hydrate crystals melts, and the gas hydrate decomposes releasing the gas. This provides a "fizzing" sensation similar to that of carbonated drinks.

Suitable temperature and pressure conditions for the formation of carbon dioxide or nitrous oxide gas hydrates can be derived from the phase diagrams of the respective gas-aqueous liquid combination, which are available in the literature. For example, the phase diagram for carbon dioxide gas hydrates is given in Figure 1. In step a), the aqueous solution of the aerating agent and carbon dioxide is pressurized to a pressure of about 10 bar ($10^6$ Pa) or higher, preferably from 15 to 45 bar. The temperature is above 0°C, preferably such as about 5°C. In step b), the temperature is reduced to below 0°C (e.g. -10 or -20°C), thus forming the solid gas hydrate / ice composite.

The gas hydrates can be prepared as follows. First, the aerating agent is dissolved in water. The solution is then pressurized (using carbon dioxide or nitrous oxide or mixtures thereof). The solution may be cooled to aid dissolution of the gas. Preferably the aqueous solution consists essentially of water and the aerating agent, together with the gas, so that no other substances are present in significant amounts (e.g. the aqueous solution contains less than 1 wt%, preferably less than 0.1 wt% of other substances). At this stage, the temperature of the solution is preferably as low as possible without entering the part of the phase diagram where gas hydrate is formed. After allowing sufficient time for gas to dissolve the aqueous solution is frozen, resulting in gas hydrate particles encapsulated in ice.

This process can be carried out as a batch process, for example the aqueous gasified solution is put into a pressure vessel which is then placed in a freezer for the freezing step. Alternatively, the process may be a continuous process. For example the aqueous gasified solution (preferably at a temperature of from 0°C to 15°C) can be passed under pressure (e.g. 10 bars or higher) through an extruder (e.g. a screw extruder) with a cooled barrel. Preferably the temperature of barrel near the exit end is from -50°C to -10°C. The pressure is maintained by the formation of a frozen plug of product within the extruder, preferably at or near the extruder exit. Thus the extruder allows the temperature and pressure conditions required for the formation of gas hydrate to be created.

Aerating agents

In the context of the present invention, the term "aerating agent" means an edible component which facilitates the formation of gas bubbles or foams and / or enhances gas bubble or foam stability, for example because of its surface activity and/or the viscosity it imparts.

Aerating agents include proteins, such as dairy proteins, soy proteins, egg protein, and hydrophobins, especially class II hydrophobins such as HFB I and HFB II from Trichoderma reesei; protein hydrolysates (often based on soy protein or dairy protein); non-ionic surfactants and anionic surfactants. Mixtures of more than one aerating agent may be used.

Preferably the aerating agent is a protein-based aerating agent, for example a hydrolysed milk protein such as Hygel™ and Hyfoama™ (available from Kerry Biosciences); or a hydrolysed soy protein such as Versawhip (available from Kerry Biosciences) and D-100™ (available from Gunter Industries). Alternatively, the aerating agent may be non-protein-based, for example Tweens, sucrose esters, diacetyl tartaric acid esters of monoglycerides (such as DATEM), citric acid esters of monoglycerides, polyglycerol esters (such as PGE 55, a polyglycerol ester of fatty acids, available from Danisco), stearoyl lactylates, lactic acid esters, acetic acid esters, propylene glycol esters and mono-/di-glycerides (such as Myverol 18-04K, a distilled 95% monoglyceride prepared from vegetable oils, available from Quest International). Other aerating agents include biosurfactants such as glycolipids; lipopeptides and lipoproteins, fatty acids, neutral lipids, and phospholipids; polymeric biosurfactants.

The amount of aerating agent in the aqueous solution is at least 0.01 wt%, preferably at least 0.05, more preferably at least 0.1 wt%, most preferably at least 0.2 wt%. The amount of aerating agent is less than 5 wt%, preferably less than 2 wt%, more preferably less than 1 wt%, most preferably less than 0.5 wt%.

Preferably the aerating agent is such that in aqueous solution, the aerating agent produces a foam having a gas phase volume of at least 20%, according to the following test. 80 mL of an aqueous solution of aerating agent (0.5 wt. %) is prepared. The solution is aerated by shearing the solution in a cooled (2°C) cylindrical, vertically mounted, jacketed stainless steel vessel with internal proportions of 105 mm height and diameter 72 mm. The lid of the vessel fills 54% of the internal volume leaving 46% (180 ml) for the sample. The rotor used to shear the sample consists of a rectangular impeller of the correct proportions to scrape the inside surface of the container as it rotates (72 mm x 41.5mm). Also attached to the rotor are two semi-circular (60 mm diameter) high-shear blades positioned at a 45° angle to the rectangular attachment. 80mL solution is poured into the vessel and the lid secured. The solution is then sheared at 1250 rpm for 10 minutes. The aerated solution is immediately poured into a measuring cylinder. The foam volume is read off from the measuring cylinder. The gas phase volume is determined from the measured foam volume and the known volume of the aqueous phase (i.e. 80 mL) as follows:

$$\text{gas phase volume} = [(\text{foam volume} - 80\text{mL}) / \text{foam volume}] \times 100$$

We have found that the gas hydrate / ice composite thus produced has higher activity (quantity of entrapped gas per unit weight ice) than when made without an aerating agent. Preferably the activity is at least 20%, more preferably at least 30%, most preferably at least 40% greater than when the aerating agent is not used (with the same process conditions). We have found also that when the extrusion process is used, the aerating agent has the further benefit that the torque is reduced during extrusion compared to using pure water, i.e. the aerating agent can also act as a processing aid.

The gas hydrate / ice composite is generally intended as an additive to frozen confections to make them fizzy in the mouth. Thus after production, the composite is typically broken up into particles of the required size (e.g. - 1-5mm), for example by milling. The pieces may then be packaged directly, or they may be mixed with a sauce or incorporated into a frozen confection such as ice cream, sorbet or water ice to form a final product.

The term "frozen confection" means a sweet-tasting fabricated foodstuff intended for consumption in the frozen state (i.e. under conditions wherein the temperature of the foodstuff is less than 0°C, and preferably under conditions wherein the foodstuff comprises significant amounts of ice). Frozen confections include ice cream, sorbet, sherbet, frozen yoghurt, water ice, milk ice and the like. Frozen confections such as ice cream and frozen yoghurt typically contain fat, protein (such as milk protein) sugars, together with other minor ingredients such as stabilisers, emulsifiers, colours and flavourings. Water ice typically contains, by weight of the composition 15-25% sugars together with stabilisers, colours and flavourings.

Typically the other ingredients have already been combined to produce a frozen confection (e.g. ice cream) or a sauce / syrup, into which the gas hydrate / ice particles are mixed. Preferably the edible gas hydrate / ice composite constitutes from 5 to 50 wt%, preferably 10 to 20 wt% of the total frozen confection After combining the gas hydrate with the other ingredients, the frozen confection may be subjected to a further freezing step (e.g. hardening), and may then be packaged.

The invention will now be further described by reference to the examples, which are illustrative only and non-limiting.

Example 1

Carbon dioxide hydrate was made using the following process. A pressure vessel (0.5L internal volume) was placed in a water bath at 5°C. 300g of an aqueous solution of an aerating agent was placed inside the pressure vessel, together with a magnetic stirrer. The vessel was pressurized to 20 bar with carbon dioxide, and held at 5°C with stirring for 2 hours. At the end of this time, the carbon dioxide feed was disconnected (without releasing the pressure), the vessel was sealed and then placed in freezer at - 20°C overnight to form a piece of ice containing carbon dioxide hydrate crystals. The ice was then removed from pressure vessel and broken up into pieces. Samples of approximately 10g were then taken for activity measurements.

The aerating agents used were Tween 20, Bipro (whey protein isolate from Davisco Foods International Inc), Hygel (hydrolysed milk protein from Kerry Biosciences), sucrose ester (S1670 obtained Mitsubishi-Kagaku Foods Corporation), DATEM (di-acetyl tartaric acid ester of monoglyceride, obtained from Danisco), and hydrophobin (HFB II from Trichoderma reesei essentially as described in WO00/58342 and Linder et al., 2001, Biomacromolecules 2: 511-517, was obtained from VTT Biotechnology, Finland). Control samples using no aerating agent were also produced.

The activity of the samples was measured as follows. Approximately 10g of the ice /gas hydrate composite was sealed into an aerosol can. The can and contents were equilibrated to room temperature, so that the ice melted and hydrate decomposed, releasing the gas. The headspace gas pressure was then measured using a Druck DPI 705 pressure meter. The activity is calculated as the volume of carbon dioxide (ml) released per gram of composite sample using the following calculation.

The sealed can (total volume V) contains a known mass (M) and volume $V_s$ of the composite, which contains an amount of carbon dioxide which is to be determined (i.e. the activity, A). The can also contains a volume $(V-V_s)$ of air which is initially at temperature To (taken to be 273K) and atmospheric pressure, $P_o$ (1.0 x $10^5$ Pa). The system then warms up to ambient temperature T (taken to be 293K), and the ice melts, releasing the carbon dioxide. At final equilibrium, the can contains a volume $V_l$ of liquid, in which part of the air and carbon dioxide are dissolved. The remaining gaseous mixture of air and carbon dioxide has a volume $(V-V_l)$ and a pressure, P which is measured. Air and carbon dioxide are assumed to behave as ideal gases. By applying the ideal gas law and conservation of mass and by knowing the densities of ice (920 kgm$^{-3}$) and water (1000 kgm$^{-3}$), the activity (A) can be calculated as:

$$A = \frac{RT_0}{MP_0} \cdot \frac{Z + H_c}{H_c} \cdot \left[ \frac{P(V - V_l)}{RT} - \left( \frac{H_a P_0 (V - V_s)}{RT_0 (Z + H_a)} \right) \right]$$

where

$$Z = \frac{mRT}{m_w (V - V_l)}$$

$H_a$ is the solubility of air ($6.73 \times 10^9$ Nm$^{-2}$) and $H_c$ is the solubility of carbon dioxide ($1.42 \times 10^8$ Nm$^{-2}$). R is the ideal gas constant (8.31 JK$^{-1}$mol$^{-1}$) and $m_w$ is the molecular weight of water (18 gmol$^{-1}$). Six samples were measured for each aerating agent, and the mean activities (expressed as ml $CO_2$/g product) are given in Table 1 (the error bar is approximately $\pm$ 10%).

Table 1

| Aerating agent | Amount (wt %) | Activity (ml/g) | Increase % |
|---|---|---|---|
| None | - | 12.3 | - |
| Tween 20 | 0.05 | 14.7 | 20 |
| Tween 20 | 0.2 | 15.2 | 24 |
| Bipro | 0.2 | 16.4 | 33 |
| Bipro | 0.5 | 16.2 | 32 |
| Bipro | 1.0 | 17.0 | 38 |
| Hygel | 0.2 | 13.9 | 13 |
| Sucrose Ester | 0.2 | 16.8 | 37 |
| DATEM | 0.2 | 15.4 | 25 |
| Hydrophobin HFB II | 0.05 | 17.2 | 40 |

Example 2

A single screw extruder of length 0.47m, internal diameter 19 mm, screw angle 17° and 1.27 mm flight height was used to make carbonated water ice. Carbon dioxide was dissolved in the solution of interest at a pressure 15 bars for at least one hour beforehand. The temperature of the solution was 5°C, i.e. slightly above the value required for gas hydrate formation according to the phase diagram. For extruder start up, the barrel exit was closed to allow it to fill with water. The cooling was turned on whilst the screw was rotated so that ice began to form. After a few minutes, a substantial amount of ice had formed within the extruder and the torque on the screw began to increase. The increase in torque indicated that the screw had begun to transport ice along the barrel and that a plug of ice had formed at the exit. The extruder exit was then opened and ice began to be extruded from it. Once the torque on the screw had reached a steady state, the water supply to the extruder was shut off and the carbonated solution under pressure was diverted to the extruder. A composite of carbon dioxide gas hydrate and ice was produced using a barrel temperature of -10°C and a screw speed of 16 RPM.

Samples of the gas hydrate / ice composite were taken after steady conditions had been reached, typically from about 15 minutes after the carbonated solution had first to be fed to the extruder. The activities were measured using a number of samples for each aerating agent, and the mean values are shown in Table 2. A control sample was also made under identical conditions without an aerating agent.

Table 2

| Aerating agent | Amount (wt%) | Activity (ml / g) | Increase (%) |
|---|---|---|---|
| None | - | 9.3 | - |
| Tween 20 | 0.2 | 14.2 | 53 |
| Tween 60 | 0.2 | 11.6 | 25 |
| Bipro | 1.0 | 13.9 | 50 |
| HFB II | 0.05 | 16.3 | 75 |

Examples 1 and 2 show that aerating agents increase the activity of the resulting gas hydrate / ice composites.
The various features and embodiments of the present invention, referred to in individual sections above apply, as appropriate, to other sections, mutatis mutandis. Consequently features specified in one section may be combined with features specified in other sections, as appropriate.

**Claims**

1. A method for producing an edible composite of gas hydrate and ice, the method comprising the steps of:

a) contacting an aqueous solution with carbon dioxide or nitrous oxide at a sufficiently high pressure to form a gas hydrate, but at a temperature preventing this; and then
b) reducing the temperature of the solution to form the gas hydrate and ice; **characterized in that** the aqueous solution contains from 0.01 to 5 wt% of an aerating agent.

2. A method according to claim 1 wherein the gas is carbon dioxide.

3. A method according to claim 1 or claim 2 wherein the aerating agent is a protein, a protein hydrolysate, a hydrophobin, a non-ionic surfactant or an anionic surfactant.

4. A method according to any of claims 1 to 3 wherein the aerating agent is present in an amount of from 0.05 to 2 wt%.

5. A method according to claim 4 wherein the aerating agent is present in an amount of 0.1 to 1 wt%.

6. A method according to any of claims 1 to 5 wherein the aqueous solution consists essentially of water, the gas and the aerating agent.

7. A method according to any of claims 1 to 6 wherein step a) is performed in a pressure vessel which is then placed in a freezer in step b).

8. A method according to any of claims 1 to 6 wherein in step b) the aqueous solution is passed under pressure through an extruder with a refrigerated barrel.

9. An edible composite of carbon dioxide or nitrous oxide gas hydrate and ice, **characterized in that** it comprises from 0.01 to 5 wt% of an aerating agent.

10. A process for producing a frozen confection, the process comprising producing an edible composite according to claim 9; and then combining the composite with the remaining ingredients of the frozen confection.

11. A process according to claim 10 wherein the composite constitutes from 5 to 50 wt%, preferably 10 to 20 wt% of the frozen confection.

12. A frozen confection comprising an edible composite according to claim 9.


**Patentansprüche**

1. Verfahren zum Herstellen eines essbaren Komposits aus Gashydrat und Eis, wobei das Verfahren die folgenden Schritte aufweist:

   a) Inkontaktbringen einer wässrigen Lösung mit Kohlendioxid oder Stickoxid bei ausreichend hohem Druck, um ein Gashydrat zu bilden, jedoch bei einer Temperatur, die dies verhindert; und danach
   b) Vermindern der Temperatur der Lösung, um das Gashydrat und Eis zu erzeugen;
   **dadurch gekennzeichnet, dass** die wässrige Lösung 0,01 bis 5 Gew.-% eines Auflockerungsmittels enthält.

2. Verfahren nach Anspruch 1,
   wobei Gas Kohlendioxid ist.

3. Verfahren nach Anspruch 1 oder 2,
   wobei das Auflockerungsmittel ein Protein, ein Proteinhydrolysat, Hydrophobin, ein nicht-ionisches oberflächenaktives Mittel oder ein anionisches oberflächenaktives Mittel ist.

4. Verfahren nach einem der Ansprüche 1 bis 3,
   wobei das Auflockerungsmittel in einer Menge von 0,05 bis 2 Gew.-% vorliegt.

5. Verfahren nach Anspruch 4,
   wobei das Auflockerungsmittel in einer Menge von 0,1 bis 1 Gew.-% vorliegt.

6. Verfahren nach einem der Ansprüche 1 bis 5,
   wobei die wässrige Lösung im Wesentlichen aus Wasser, dem Gas und dem Auflockerungsmittel besteht.

7. Verfahren nach einem der Ansprüche 1 bis 6,
   wobei der Schritt a) in einem Druckgefäß durchgeführt wird, das dann im Schritt b) in eine Gefriervorrichtung gegeben wird.

8. Verfahren nach einem der Ansprüche 1 bis 6,
   wobei im Schritt b) die wässrige Lösung unter Druck durch einen Extruder mit einer tiefgekühlten Trommel geleitet wird.

9. Essbares Komposit aus Kohlendioxid- oder Stickoxid-Gashydrat und Eis,
   **dadurch gekennzeichnet, dass** es 0,01 bis 5 Gew.-% eines Auflockerungsmittels aufweist.

10. Verfahren zum Herstellen von gefrorenem Konfekt,
    wobei das Verfahren das Erzeugen eines essbaren Komposits nach Anspruch 9 und das anschließende Kombinieren des Komposits mit den restlichen Bestandteilen des gefrorenen Konfekts aufweist.

**11.** Verfahren nach Anspruch 10,
wobei das Komposit 5 bis 50 Gew.-%, vorzugsweise 10 bis 20 Gew.-% des gefrorenen Konfekts ausmacht.

**12.** Gefrorenes Konfekt,
das ein essbares Komposit nach Anspruch 9 aufweist.

## Revendications

**1.** Méthode de production d'un composite comestible d'hydrate de gaz et de glace, la méthode comprenant les étapes consistant à :

a) mettre en contact une solution aqueuse avec du dioxyde de carbone ou de l'oxyde nitreux à une pression suffisamment élevée pour former un hydrate de gaz, mais à une température empêchant ceci ; puis
b) réduire la température de la solution pour former l'hydrate de gaz et la glace ;
**caractérisée en ce que** la solution aqueuse contient de 0,01 à 5 % en poids d'un agent d'aération.

**2.** Méthode selon la revendication 1, dans laquelle le gaz est du dioxyde de carbone.

**3.** Méthode selon la revendication 1 ou la revendication 2, dans laquelle l'agent d'aération est une protéine, un hydrolysat de protéine, une hydrophobine, un agent tensioactif non ionique ou un agent tensioactif anionique.

**4.** Méthode selon l'une quelconque des revendications 1 à 3, dans laquelle l'agent d'aération est présent dans une quantité de 0,05 à 2 % en poids.

**5.** Méthode selon la revendication 4, dans laquelle l'agent d'aération est présent dans une quantité de 0,1 à 1 % en poids.

**6.** Méthode selon l'une quelconque des revendications 1 à 5, dans laquelle la solution aqueuse se compose essentiellement d'eau, du gaz et de l'agent d'aération.

**7.** Méthode selon l'une quelconque des revendications 1 à 6, dans laquelle l'étape a) est réalisée dans une cuve à pression qui est ensuite placée dans un congélateur dans l'étape b).

**8.** Méthode selon l'une quelconque des revendications 1 à 6, dans laquelle, dans l'étape b), la solution aqueuse passe sous pression à travers une extrudeuse avec un fût réfrigéré.

**9.** Composite comestible d'hydrate de gaz de dioxyde de carbon ou d'oxyde nitreux et de glace, **caractérisé en ce qu'**il comprend de 0,01 à 5 % en poids d'un agent d'aération.

**10.** Procédé de production d'une confection congelée, le procécé comprenant la production d'un composite comestible selon la revendication 9 ; puis la combinaison du composite avec les ingrédients restants de la confection congelée.

**11.** Procédé selon la revendication 10, dans lequel le composite constitue de 5 à 50 % en poids, de préférence de 10 à 20 % en poids, de la confection congelée.

**12.** Confection congelée comprenant un composite comestible selon la revendication 9.

## Fig.1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9402414 A
- WO 9716980 A
- US 4398394 A
- WO 0234065 A
- US 5538745 A
- WO 0058342 A

**Non-patent literature cited in the description**

- **LINDER et al.** *Biomacromolecules,* 2001, vol. 2, 511-517